**Europäisches Patentamt**

**European Patent Office**

**Office européen des brevets**

(11) Veröffentlichungsnummer: **0 387 373 A2**

## (12) EUROPÄISCHE PATENTANMELDUNG

(21) Anmeldenummer: **89104543.7**

(22) Anmeldetag: **14.03.89**

(51) Int. Cl.⁵: **B29C 65/18, B29C 65/74, //B29K23:00**

(43) Veröffentlichungstag der Anmeldung:
**19.09.90 Patentblatt 90/38**

(84) Benannte Vertragsstaaten:
**AT CH FR GB IT LI NL**

(71) Anmelder: **PAUL KIEFEL HOCHFREQUENZ-ANLAGEN GMBH**
**Sudetenstrasse 3-7**
**D-8228 Freilassing(DE)**

(72) Erfinder: **Hinterseer, Heinz**
**Johann-Sebastian-Bach-Strasse 4**
**D-8228 Freilassing(DE)**

(74) Vertreter: **Patentanwälte Leinweber & Zimmermann**
**Rosental 7/II Aufg.**
**D-8000 München 2(DE)**

(54) **Verfahren und Vorrichtung zum Herstellen von faltbaren Gegenständen, wie Buchdecken, Faltbehälter od. dgl.**

(57) Das Verfahren zum Herstellen von faltbaren Gegenständen, wie Buchdecken, Faltbehälter od. dgl. durch Verschweißen von Kunststoff-Folien unter Zwischenschaltung von Verstärkungseinlagen bedient sich einer den Einsatz von halogenfreien Thermoplastfolien ermöglichenden Schweißvorrichtung mit einem auf die gewünschte Schweißtemperatur erwärmbaren Schweißwerkzeug und einem auf eine Temperatur, die unterhalb der Schmelztemperatur der Folien liegt, einstellbaren Gegenwerkzeug, das eine der gewünschten Schweiß- oder Prägekontur entsprechende Profilierung, insbesondere eine Schneidkante aufweist, sowie einer in die Schweißvorrichtung einführbaren wärmeleitfähigen Trennfolie, durch die hindurch den Folien die zu ihrer Plastifizierung erforderliche thermische Energie zuleitbar ist und von der die Folien nach ihrer Abkühlung lösbar sind.

Nach dem Hineinziehen und Fixieren einer äußeren Deckfolie, die dem auf eine im Temperaturbereich der Folienerweichung, jedoch unter der Folienschmelztemperatur liegenden Temperatur erwärmten Gegenwerkzeug zugewandt ist, durch Erzeugen eine Vakuums in der von dem Gegenwerkzeug gebildeten flachen Mulde, wird die Verstärkungseinlage in diese durch die Deckfolie ausgekleidete flache Mulde eingelegt, die dem Gegenwerkzeug abgelegene innere Folie und die Trennfolie auf die Mulde aufgelegt, das erhitzte Schweißwerkzeug in Richtung des Gegenwerkzeugs bewegt, das Schweißwerkzeug nach vollzogener Schweißung zurückgeführt sowie nach Maßgabe der Schweißnahtabkühlung zunächst die Trennfolie von der Schweißnaht und sodann die Folien-Verstärkungseinlagen-Einheit nach Entfernen des Vakuums von der Mulde des Gegenwerkzeugs gelöst.

Fig. 1

## Verfahren und Vorrichtung zum Herstellen von faltbaren Gegenständen, wie Buchdecken, Faltbehälter od. dgl.

Die Erfindung bezieht sich auf ein Verfahren zum Herstellen von faltbaren Gegenständen, wie Buchdecken, Faltbehälter oder dgl. durch Verschweißen von Kunststoff-Folien unter Zwischenschaltung von Verstärkungseinlagen, sowie auf eine Vorrichtung zur Durchführung des Verfahrens.

Bei einem bekannten Verfahren dieser Art, das seit Jahren in großem Umfang eingesetzt wird, finden die erforderliche Schweißenergie liefernde HF-Schweißelektroden Anwendung, mit deren Hilfe sich PVC-Folien zu Buchdecken verarbeiten lassen.

Das Profil der Schweißstege dieser Elektroden ist dabei derart gestellt, daß unmittelbar neben der Schweißnaht eine umlaufende Trennlinie entsteht, entlang derer die Gegenstände leicht aus dem Abfallgitter ausgerissen werden können. Im Zuge von Umweltschutzmaßnahmen wird angestrebt, auf den Einsatz von PVC-Folien soweit wie möglich zu verzichten und diese Folien durch umweltfreundliche und dennoch preisgünstige halogenfreie Thermoplastfolien, insbesondere Polypropylen-oder Polyäthylen-Folien zu ersetzen. Diese sind jedoch in dem herkömmlichen HF-Schweißverfahren nicht zu Buchdecken, Faltbehältern oder dgl. verarbeitbar.

Man hat deshalb daran gedacht, sich bei der Herstellung faltbarer Gegenstände unter Verwendung von Folien aus halogenfreien Thermoplasten der Schweißvorrichtung zu bedienen, die Gegenstand der DE-PS 27 57 628 ist. Hier haben sich jedoch Schwierigkeiten gezeigt, weil es in der Praxis nur einer sehr kurzen Einwirkzeit der Schweißelektrode über die Trennfolie auf PP- bzw. PE-Folien bedarf, um letztere im Bereich der zu bildenden Schweißnaht auf die erforderliche Schweißtemperatur zu erhitzen. Damit die Gegenelektrode nicht ebenfalls auf eine Temperatur aufgeheizt wird, die über der Schmelztemperatur der Folien liegt, was zu einem Verkleben und Haften der Gegenelektrode an den Folien führen würde, müssen die Werkzeuge sogleich nach Herstellung der Schweißnaht voneinander entfernt werden. Da PP- bzw. PE-Folien, die beim Einpressen der Verstärkungseinlagen, z.B. in Form von Papptafeln in dem Bereich zwischen den das Gegenwerkzeug bildenden Stegen mehr oder minder verformt werden, ein nachteiliges Rückstellbestreben besitzen, findet unmittelbar im Augenblick des Auseinanderfahrens der Werkzeuge ein Rückstellen der Folien unter Beeinträchtigung der noch nicht verfestigten Schweißnaht statt.

Der Erfindung liegt die Aufgabe zugrunde, ein Verfahren aufzuzeigen, mit dessen Hilfe unter Vermeidung der aufgeführten Nachteile auf dennoch sehr einfache und rationelle Weise Buchdecken, Faltbehälter oder dgl. unter Verwendung von halogenfreien Thermoplasten, vorzugsweise von PP- bzw. PE-Folien herstellbar sind, sowie eine Vorrichtung zur Durchführung dieses Verfahrens.

Das Verfahren nach der Erfindung, bei dem diese Aufgabe gelöst ist, zeichnet sich durch die im kennzeichnenden Teil des Anspruches 1 herausgestellten Maßnahmen aus.

Die kurz vor dem Schweißvorgang mit dem Gegenwerkzeug unmittelbar in Berührung gelangende Folie verliert im Werkzeugbereich durch Erwärmung auf die noch unterhalb der Schmelztemperatur liegende Temperatur des Gegenwerkzeugs ihre Steifigkeit und kann sich unter der nachfolgenden Einwirkung des Vakuums dicht an die Konturen der von dem Gegenwerkzeug gebildeten Mulde anpassen. Deshalb läßt sich in die Mulde die mit geringstem Untermaß vorbereitete Verstärkungseinlage einbringen. Es hat sich gezeigt, daß nach Abschluß des folgenden, nur etwa eine Sekunde benötigenden Schweißvorgangs das Schweißwerkzeug abgehoben werden kann, wobei die Trennfolie zunächst noch in Anlage an der Schweißnaht verbleibt. Zu einer Beeinträchtigung der Schweißnaht kommt es bei dieser Vorgangsweise nicht; in kurzer Zeit, in der Regel etwa einer Sekunde nach dem Abheben des Schweißwerkzeugs ist die Schweißnaht vielmehr so weit abgekühlt und verfestigt, daß sich die gesamte Folien-Versteifungseinlagen-Einheit vom Gegenwerkzeug ablösen läßt.

Mit diesem Verfahren sind deshalb auch aus halogenfreien Thermoplasten Buchdecken oder dgl. herstellbar, die sich nicht nur durch einwandfreie haltbare und ästhetisch ansprechende Schweißnähte auszeichnen sondern auch durch sehr glatt an den Verstärkungseinlagen anliegende Folienbereiche. Selbstverständlich ist dieses Verfahren auch zum Verschweißen von PVC-Folien anwendbar, wenngleich hierfür im allgemeinen das herkömmliche HF-Schweißen bevorzugt wird.

Bei Einsatz von Verstärkungseinlagen, die genau auf die Größe des Gegenwerkzeugs abgestimmt sind, kann es zu einem gewissen Haften der geschweißten Buchdecken in der Gegenwerkzeugmulde kommen. Um dem zu begegnen und die Entnahme der Buchdecken zu erleichtern, hat es sich in weiterer vorteilhafter Ausgestaltung des Verfahrens nach der Erfindung als sehr zweckmäßig erwiesen, wenn die Mulde des Gegenwerkzeugs nach Entfernen des Vakuums kurzzeitig an eine das Auswerfen der Folien-Verstärkungseinlagen-Einheit begünstigende Überdruckquelle angeschlossen wird.

Als besonders zweckmäßig im Hinblick auf eine innige und gleichmäßige Anlage der Folien an der Verstärkungseinlage hat es sich herausgestellt, wenn nach dem Auflegen der inneren Folie, jedoch vor dem Beaufschlagendas erhitzten Schweißwerkzeugs in Richtung des Gegenwerkzeugs der Bereich zwischen der Deckfolie und der inneren Folie evakuiert wird.

Die Erfindung ist weiterhin auf eine Vorrichtung zur Durchführung des genannten Verfahrens gerichtet, die dadurch gekennzeichnet ist, daß unterhalb eines auf- und absteuerbaren Schweißwerkzeugs mehrere auf einem Dreh- oder Schiebetisch angeordnete Gegenwerkzeuge nebst Trennfolie vorgesehen sind. Bei Einsatz dieser Vorrichtung kann jeweils ein Gegenwerkzeug für den Schweißvorgang vorbereitet werden, während sich das andere in der Schweißpresse befindet und vom Schweißwerkzeug beaufschlagt wird. Ein weiteres Gegenwerkzeug könnte an einer dritten Stelle eines Drehtisches angeordnet und für die Entnahme des geschweißten Gegenstands nach Abkühlung bereit sein, bevor es zur Vorbereitungsstation unmittelbar vor der Schweißpresse weitergeführt wird.

Während bei der vorerwähnten Vorrichtung das Schweißwerkzeug von oben her auf das Gegenwerkzeug zubewegbar sind, ist auch eine Ausführung möglich und mit Erfolg einsetzbar, bei der baulich umgekehrte Verhältnisse gegeben sind. Diese zeichnet sich dadurch aus, daß oberhalb eines auf einer Hubtischpresse befindlichen Schweißwerkzeugs ein Gegenwerkzeug festgelegt ist und daß für die Positionierung der Verstärkungseinlagen auf einer zwischengeschalteten Trennfolie eine oberhalb der Trennfolie befindliche Zentriereinrichtung mit auf die Verstärkungseinlagen einwirkenden Anschlägen vorgesehen ist, die vor dem Schließen der Presse zurückziehbar sind.

Bei der erstgenannten Vorrichtung wie auch der erwähnten Variante ist es von Vorteil, wenn die Gegenwerkzeuge an eine ihnen gemeinsame, dem Dreh- oder Schiebetisch zugeordnete Vakuumquelle anschließbar sind.

In weiterer Ausgestaltung wird eine besonders leichte Handhabung der Trennfolie dadurch erreicht, daß sie in Form eines in einen Rahmen eingespannten Folienzuschnitts einsetzbar ist.

Stattdessen kann in sehr vorteilhafter Weise auch der die Trennfolie tragende Rahmen auf einem Dreh- bzw. Schiebetisch angeordnet und mit diesem teilweise in die das untere Schweißwerkzeug und das obere Gegenwerkzeug umfassende Schweißstation ein- und wieder ausfahrbar sein.

Bei einer weiteren abgewandelten Ausführung, bei der weder die Trennfolie in einem Rahmen angeordnet noch ein Dreh- bzw. Schiebetisch vorgesehen ist, ist einem Schweißwerkzeug auf einer Hubtischpresse und einem oberhalb des Schweißwerkzeugs angeordnetem Gegenwerkzeug eine in Form eines endlosen Förderbandes ausgebildete, zwischen beiden Werkzeugen hindurchgeführte Trennfolie zugeordnet. Bei dieser Vorrichtung werden die Verstärkungseinlagen sehr genau auf dem Förderband angeordnet, so daß sie jeweils exakt positioniert in die Schweißstellung gelangen. Sowohl das Schweißwerkzeug wie auch das Gegenwerkzeug können aufeinander zu und voneinander weg bewegt werden. Um die Freigabe des Schweißgutes im Anschluß an einen Schweißvorgang zu erleichtern, insbesondere wenn das Gegenwerkzeug nicht oder nur in einem geringen Umfang aufwärts bzw abwärts beweglich gelagert ist, ist es zweckmäßig, wenn - in Förderrichtung gesehen - vor und hinter dem Schweißwerkzeug je eine Stützrolle für das Förderband vorgesehen sind, die im Zuge eines Schweißarbeitstaktes zur Lösung des Schweißgutes aus der Mulde des Gegenwerkzeugs und zum Abtransport absenkbar sind.

Um einen einwandfreien Vorschub sicherzustellen, hat es sich als günstig erwiesen, wenn der Schweißwerkzeug-Gegenwerkzeug-Einheit Vorschubzangen zum taktweisen Erfassen und schrittweisen Vorbewegen des Förderbandes nachgeschaltet sind. Dabei ist es von Vorteil, außer den in- und entgegen der Förderrichtung hin und her bewegbaren Vorschubzangen stationäre Haltezangen für die vorübergehende Fixierung des Förderbandes während des Vorschubzangen-Rückhubes vorzusehen.

Um die Trennfolie zu schonen, ist zweckmäßigerweise der das Schweißwerkzeug tragenden Schweißpresse eine die Eindringtiefe der Schneidkante des Gegenwerkzeugs im Bereich der Schweißnaht bestimmende Abstandsbegrenzung zugeordnet.

Weitere Einzelheiten, Vorteile und Merkmale der Erfindung ergeben sich aus der folgenden Beschreibung und der Zeichnung, auf die bezüglich der Offenbarung aller nicht im Text beschriebenen Einzelheiten ausdrücklich verwiesen wird. Es zeigt:

Fig. 1 eine schematische Vertikalschnittansicht einer ersten Vorrichtung nach der Erfindung,

Fig. 2 eine analoge Ansicht einer abgewandelten Vorrichtung, die sich ebenso wie die erste Vorrichtung eines Rahmens bedient, in den die Trennfolie eingespannt ist, und

Fig. 3 eine schematische Schnittansicht einer weiteren Variante, die sich einer Trennfolie in Form eines endlosen Förderbandes bedient.

Wie aus der Zeichnung ersichtlich, werden die herzustellenden faltbaren Gegenstände durch Verschweißen von Thermoplastfolien, und zwar einer äußeren Deckfolie 1 und einer inneren Folie 2 unter Zwischenschaltung von Verstärkungseinlagen 3, beispielsweise aus Pappe hergestellt. Dabei können verschiedene Vorrichtungen zum Einsatz gelangen.

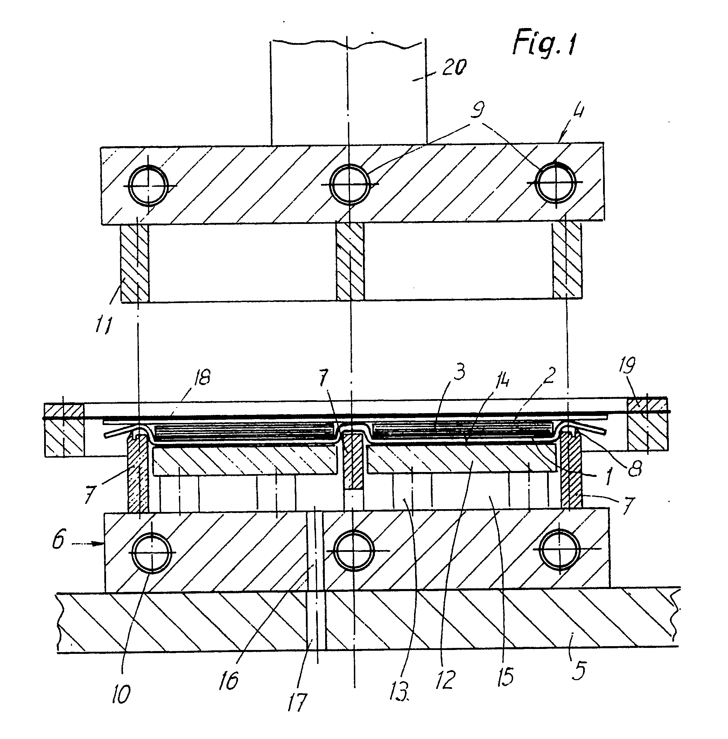

Bei der Vorrichtung nach Fig. 1 findet ein auf und absteuerbares Schweißwerkzeug 4 Anwendung, unter dem mehrere auf einem Dreh- oder Schiebetisch 5 angeordnete Gegenwerkzeuge 6, von denen in Fig. 1 nur eines veranschaulicht ist, vorgesehen sind. Jedes Gegenwerkzeug 6 umfaßt Stege 7, von denen die äußeren eine durchgehende Schneidkante 8 aufweisen. Sowohl dem Schweißwerkzeug 4 wie auch dem Gegenwerkzeug 6 ist jeweils eine Heizeinrichtung 9 bzw. 10 zugeordnet.Die Heizeinrichtung 9 dient der Erwärmung der Schweißstege 11 des Schweißwerkzeugs 4 auf die gewünschte Schweißtemperatur. Mit Hilfe der Heizeinrichtung 10 sind die Stege 7 des Gegenwerkzeugs 6 auf eine unterhalb der Schmelztemperatur der Folien 1, 2 einstellbare Temperatur erwärmbar.

Wie aus Fig. 1 ersichtlich, bilden die Stege 7 zusammen mit einer Auflageplatte 12 auf Säulen 13 eine Mulde 14. Der der Mulde 14 abgewandte Raum 15 unterhalb der Auflageplatte 12 steht über Kanäle 16 bzw. 17 des Gegenwerkzeugs 6 bzw. des Dreh- oder Schiebetischs 5 mit einer nicht näher veranschaulichten Vakuumquelle verbindbar. Zwischen dem Schweißwerkzeug 4 und dem Gegenwerkzeug 6 ist eine Trennfolie 18 angeordnet, und zwar in Form eines in einen Rahmen 19 eingespannten Folienzuschnitts. Das Schweißwerkzeug 4 ist auf nicht näher veranschaulichte Weise über einen Stempel 20 auf und ab bewegbar. Auf ebenfalls nicht näher veranschaulichte Weise ist der die Trennfolie 18 tragende Rahmen 19 relativ zum Gegenwerkzeug 6 wegschwenkbar angeordnet.

Diese Vorrichtung läßt sich wie folgt handhaben. Zunächst wird die äußere Deckfolie 1 auf das Gegenwerkzeug 6 aufgelegt. Dabei erfährt die Deckfolie durch die Stege 7 des Gegenwerkzeugs 6 eine Erwärmung auf eine im Temperaturbereich der Folienerweichung, jedoch unter der Folienschmelztemperatur liegende Temperatur. Durch Erzeugen eines Vakuums in der von dem Gegenwerkzeug 6 gebildeten flachen Mulde 14 wird die äußere Deckfolie 1 in die Mulde hineingezogen und in ihrer Lage fixiert. Anschließend läßt sich die Verstärkungseinlage 3 in diese durch die Deckfolie 1 ausgekleidete flache Mulde einführen und die innere Folie 2 auflegen. Durch Verschwenken des Rahmens 19 gelangt anschließend die Trennfolie 18 auf die Mulde. Sodann wird das erhitzte Schweißwerkzeug 4 in Richtung des Gegenwerkzeugs 6 bewegt. Dieses führt durch die wärmeleitfähige Trennfolie 18 hindurch den Folien 1 und 2 die zu ihrer Plastifizierung erforderliche thermische Energie zu. Nach vollzogener Schweißung sowie nach Maßgabe der Schweißnahtabkühlung wird das Gegenwerkzeug 4 zurückgeführt und anschließend zunächst die Trennfolie 18 und sodann die Folien-VerstärkungseinlagenEinheit nach Entfernen des Vakuums von der Mulde 14 des Gegenwerkzeugs 6 gelöst. Die Mulde 14 kann dabei im Anschluß an das Entfernen des Vakuums kurzzeitig an eine das Auswerfen der Folien-Verstärkungseinlagen-Einheit begünstigende, nicht veranschaulichte Überdruckquelle über die gleichen Kanäle 16 bzw. 17 angeschlossen werden. Um eine besonders enge Anlage der Folien 1 und 2 an der Verstärkungseinlage zu erreichen kann nach dem Auflegen der inneren Folie 2 jedoch vor dem Bewegen des erhitzten Schweißwerkzeugs 4 in Richtung des Gegenwerkzeugs 6 der Bereich zwischen der Deckfolie 1 und der inneren Folie 2 über einen nicht veranschaulichten seitlichen Vakuumanschluß evakuiert werden.

Wenn unterhalb eines auf- und absteuerbaren Schweißwerkzeugs 4 mehrere auf einem Drehoder Schiebetisch 5 angeordnete Gegenwerkzeuge 6 nebst Trennfolie 18 vorgesehen sind, lassen sich mit baulich besonders geringem Umfang auf sehr rationelle Weise die einzelnen Schweißvorgänge durchführen, da während eines Schweißtaktes gleichzeitig ein Gegenwerkzeug mit äußerer Deckfolie 1, Verstärkungseinlage 3 sowie innerer Folie 2 beschickt werden kann, um anschließend sogleich in die Schweißstation übergeführt zu werden.

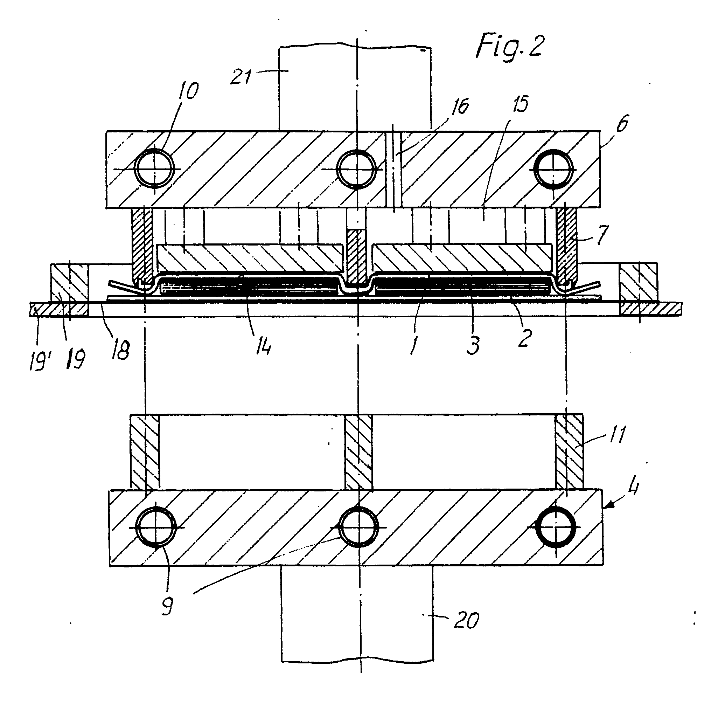

Bei der abgewandelten Ausführung nach Fig. 2 ist oberhalb des auf einer nicht näher veranschaulichten Hubtischpresse mit dem Stempel 20 befindlichen Schweißwerkzeugs 4 das Gegenwerkzeug 6 festgelegt.In diesem Fall dient die Trennfolie 18 im Rahmen 19 der Abstützung der inneren Folie 2, der Verstärkungseinlage 3 und der äußeren Folie 1. Bevor letztere aufgelegt wird erfolgt mit Hilfe einer nicht näher veranschaulichten, oberhalb der Trennfolie 18 befindlichen Zentriereinrichtung mit auf die Verstärkungseinlagen 3 einwirkenden Anschlägen, die vor dem Schließen der Presse zurückziehbar sind, eine genaue Ausrichtung auf die Lage des Gegenwerkzeugs 6 mit den Stegen 7. Über den Kanal 16 läßt sich auch hier der Raum 15 evakuieren und damit die Mulde 14 für die einwandfreien Aufnahme der Verstärkungseinlage 3 formen, bevor das Schweißwerkzeug 4 mit den Schweißstegen 11 durch Ausfahren des Stempels 20 in Schweißstellung übergeführt wird. Nach Beendigung des Schweißvorgangs wird zunächst das Schweißwerkzeug 4 abgesenkt und nach Abkühlung der Schweißnaht die Verbindung des Raums 15 zur Vakuumquelle unterbrochen und ggfls. sogar an eine Druckmittelquelle angeschlossen, um die Folien-VerstärkungseinlagenEinheit vom Gegenwerkzeug 6 zu lösen, wobei das Gegenwerkzeug über seinen Stempel 21 angehoben wird. Da sich der Rahmen 19 mit der Trennfolie 18 auf einem eine entsprechende Aussparung aufweisenden Dreh- oder Schiebetisch 19' befindet, läßt er sich unter Mitführung der Folien-Verstärkungseinlagen-Ein-heit bequem aus der Schweißstation herausführen. Gleichzeitig gelangt eine vorbereitete Folien-Verstärkungseinlagen-Anordnung mitsamt der Trennfolie in die Schweißstation, und der beschriebene Schweißvorgang wiederholt sich.

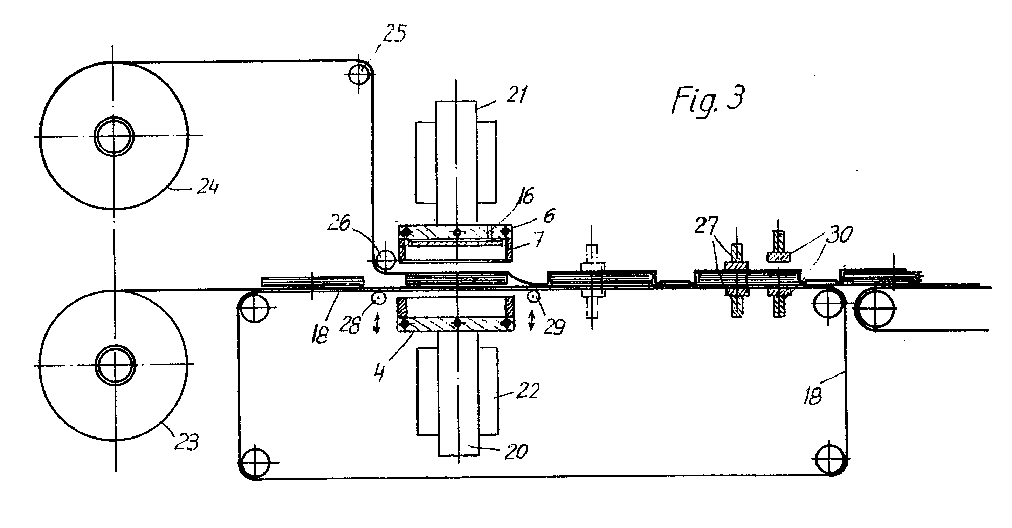

Bei der in Fig. 3 veranschaulichten abgewandelten Vorrichtung ist dem Schweißwerkzeug 4 auf der schematisch angedeuteten Hubtischpresse 22 und dem oberhalb des Schweißwerkzeugs 4 angeordneten, ebenfalls auf- und absteuerbaren Gegenwerkzeug 6 die in Form eines endlosen Förderbandes ausgebildete, zwischen beiden Werkzeugen hindurchgeführte Trennfolie 18 zugeordnet. Von zwei Rollen 23 bzw. 24 wird der Vorrichtung die innere Folie 2 bzw. die äußere Deckfolie 1 zugeführt. Letztere läuft über Umlenkrollen 25 und 26, so daß zwischen beiden Folien ein Öffnungsspalt entsteht, in den die auf der Trennfolie 18 genau positioniert abgelegte Verstärkungseinlage 3 bei taktweisem Vorschub der als Förderband dienenden Trennfolie 18 einläuft. Für diesen taktweisen Vorschub sind Vorschubzangen 27 vorgesehen, die aus einer strichpunktiert angedeuteten Position, in der sie eine Folien-Verstärkungseinlagen-Einheit mitsamt der Trennfolie 18 zwischen sich erfassen, in eine in ausgezogenen Linien veranschaulichte Positon überführbar sind. Bei diesem Vorschub unter Mitnahme der Trennfolie 18 gelangt die Verstärkungseinlage 3 in den Bereich der Schweiß-bzw. Gegenwerkzeuge 4, 6. Nach Absenken des Gegenwerkzeugs 6, Evakuieren über den Kanal 16 und Überführen der Schweißwerkzeugs 4 in die Schweißstellung läßt sich die Verschweißung auf gleiche Weise durchführen, wie dies im Zusammenhang mit den Vorrichtungen nach den Fig. 1 bzw. 2 erläutert ist. Auch bei dieser Vorrichtung wird zunächst das Schweißwerkzeug 4 abgesenkt, ehe im Anschluß an eine kurze Abkühlzeit das Schweißgut von dem Gegenwerkzeug 6 durch Entfernen des Vakuums und ggfls. Druckbeaufschlagung über den Kanal 16 freigegeben wird. Beiderseits des Schweißwerkzeuges 4 - in Förderrichtung gesehen - befinden sich Stützrollen 28 bzw. 29, die die Trennfolie 18 in der gezeigten Lage halten. Mit ihrer Hilfe läßt sich das Schweißgut besonders dann leicht aus der Schweißstation herausführen, wenn das Gegenwerkzeug 6 nicht oder nur geringfügig auf und ab bewegbar sein sollte. In diesem Fall wird im Anschluß an die Absenkung des Schweißwerkzeuges 4 eine Absenkung der Stützrollen 28 und 29 mit Hilfe einer nicht näher veranschaulichten Führung vorgenommen, und das Schweißgut, das auf der Trennfolie 18 aufliegt, gelangt aus dem Bereich der Stege 7 des Gegenwerkzeugs 6, um anschließend ungestört vorbewegt zu werden.

Um sicherzustellen, daß während der Rückführung der Vorschubzangen 27 in die strichpunktiert veranschaulichte Position keine unerwünschte Lageänderung der Trennfolie 18 mit den darauf auf-liegenden Folien bzw. Verstärkungseinlagen eintre-ten kann, sind Haltezangen 30 vorgesehen, die die Folien-Verstärkungseinlagen-Einheit solange zwischen sich erfassen, bis die Vorschubzangen 27 nach ihrer Rückbewegung die nachfolgende Einheit zwischen sich erfaßt haben.

Mit Hilfe einer der Schweißwerkzeug-Gegenwerkzeug-Einheit nachgeschalteten, nicht näher veranschaulichten Ausreißstation lassen sich die geschweißten Gegenstände vom Foliengitter trennen und mit einer geeigneten Vorrichtung gesondert vom Foliengitter abführen. Damit einerseits eine einwandfreie Trennung durch Ausreißen möglich, andererseits jedoch die zwischengeschaltete Trennfolie 18 nicht beim Schweißvorgang verletzt wird, darf die Schneidkante 8 des Gegenwerkzeugs 6 im Bereich der Schweißnaht nur durch die äußere Deckfolie 1 und den größten Teil der inneren Folie 2 hindurchtreten, nicht jedoch die Trennfolie 18 erreichen oder gar in sie hineintreten. Zu diesem Zweck ist der das Schweißwerkzeug tragenden Schweißpresse eine die Eindringtiefe der Schneidkante 8 des Gegenwerkzeugs 6 im Bereich der Schweißnaht bestimmende, nicht näher veranschaulichte Abstandsbegrenzung zugeordnet. Die zum Einsatz gelangende hoch hitzebeständige Trennfolie 18 ist durch eine Polyimidfolie, eine PTFE-Glasgewebe-Folie oder auch eine metallische Folie mit Antihaftbeschichtung oder Antihafteigenschaften gebildet. Als äußere Deckfolie 1 bzw. innere Folie gelangen zweckmäßigerweise halogenfreie Thermoplastfolien, insbesondere Polypropylen- bzw. Polyäthylen-Folien zum Einsatz. Natürlich ist es möglich, auch die herkömmlichen PVC-Folien, die normalerweise mit Hilfe von HF-Schweißvorrichtungen verarbeitet werden, mit Hilfe der beschriebenen Vorrichtung zu verschwei-ßen.

**Ansprüche**

1. Verfahren zum Herstellen von faltbaren Gegenständen, wie Buchdecken, Faltbehälter od. dgl. durch Verschweißen von Kunststoff-Folien unter Zwischenschaltung von Verstärkungseinlagen, gekennzeichnet durch Verwendung einer an sich bekannten, den Einsatz von halogenfreien Thermoplastfolien, insbesondere von Polypropylen- bzw. Polyäthylen-Folien ermöglichenden Schweißvorrichtung mit einem auf die gewünschte Schweiß-temperatur erwärmbaren Schweißwerkzeug und ei-nem auf eine Temperatur, die unterhalb der Schmelztemperatur der Folien liegt, einstellbaren Gegenwerkzeug, das eine der gewünschten Schweiß- oder Prägekontur entsprechende Profilierung, insbesondere eine Schneidkante aufweist, sowie einer in die Schweißvorrichtung einführbaren wärmeleitfähigen Trennfolie, durch die hindurch den Folien die zu ihrer Plastifizierung erforderliche thermische Energie zuleitbar ist und von der die Folien nach ihrer Abkühlung lösbar sind, sowie durch folgende Schritte:

Hineinziehen und Fixieren einer äußeen Deckfolie, die dem auf eine im Temperaturbereich der Folienerweichung, jedoch unter der Folienschmelztemperatur liegenden Temperatur erwärmten Gegenwerkzeug zugewandt ist, durch Erzeugen eines Vakuums in der von dem Gegenwerkzeug gebildeten flachen Mulde,

Einführen der Verstärkungseinlage in diese durch die Deckfolie ausgekleidete flache Mulde,

Auflegen der dem Gegenwerkzeug abgelegenen inneren Folie und der Trennfolie auf die Verstärkungseinlage,

Bewegen des erhitzten Schweißwerkzeugs in Richtung des Gegenwerkzeugs,

Rückführen des Gegenwerkzeugs nach vollzogener Schweißung sowie nach Maßgabe der Schweißnahtabkühlung,

Lösen zunächst der Trennfolie von der Schweißnaht und sodann der Folien-Verstärkungseinlagen-Einheit nach Entfernen des Vakuums von der Mulde des Gegenwerkzeugs.

2. Verfahren nach Anspruch 1, dadurch gekennzeichnet, daß die Mulde des Gegenwerkzeugs nach Entfernen des Vakuums kurzzeitig an eine das Auswerfen der Folien-Verstärkungseinlagen-Einheit begünstigende Überdruckquelle angeschlossen wird.

3. Verfahren nach Anspruch 1 oder 2, dadurch gekennzeichnet, daß nach dem Auflegen der inneren Folie, jedoch vor dem Beaufschlagen des erhitzten Schweißwerkzeugs in Richtung des Gegenwerkzeugs der Bereich zwischen der Deckfolie und der inneren Folie evakuiert wird.

4. Vorrichtung zur Durchführung des Verfahrens nach einem der vorstehenden Ansprüche 1 bis 3, dadurch gekennzeichnet, daß unterhalb eines auf- und absteuerbaren Schweißwerkzeugs (4) mehrere auf einem Dreh- oder Schiebetisch (5) angeordnete Gegenwerkzeuge (6) nebst Trennfolie (18) vorgesehen sind.

5. Vorrichtung zur Durchführung des Verfahrens nach einem der Ansprüche 1 bis 3, dadurch gekennzeichnet, daß oberhalb eines auf einer Hubtischpresse befindlichen Schweißwerkzeugs (4) ein Gegenwerkzeug (6) festgelegt ist und daß für die Positionierung der Verstärkungseinlagen (3) auf einer zwischengeschalteten Trennfolie (18) eine oberhalb der Trennfolie befindliche Zentriereinrichtung mit auf die Verstärkungseinlagen (3) einwirkenden Anschlägen vorgesehen ist, die vor dem Schließen der Presse zurückziehbar sind.

6. Vorrichtung nach Anspruch 4 oder 5, dadurch gekennzeichnet, daß die Gegenwerkzeuge (6) an eine dem Dreh-oder Schiebetisch (5) zugeordnete Vakuumquelle anschließbar sind.

7. Vorrichtung nach einem der Ansprüche 4 bis 6, dadurch gekennzeichnet, daß die Trennfolie (18) in Form eines in einen Rahmen (19) eingespannten Folienzuschnitts einsetzbar ist.

8. Vorrichtung nach Anspruch 8, dadurch gekennzeichnet, daß der die Trennfolie (18) tragende Rahmen (19) auf einem Dreh- bzw. Schiebetisch angeordnet und mit diesem teilweise in die das untere Schweißwerkzeug (4) und das obere Gegenwerkzeug (6) umfassende Schweißstation ein- und wieder ausfahrbar ist.

9. Vorrichtung zur Durchführung des Verfahrens nach einem der Ansprüche 1 bis 3, dadurch gekennzeichnet, daß einem Schweißwerkzeug (4) auf einer Hubtischpresse (22) und einem oberhalb des Schweißwerkzeugs angeordneten Gegenwerkzeug (6) eine in Form eines endlosen Förderbandes (18) ausgebildete, zwischen beiden Werkzeugen hindurchgeführte Trennfolie zugeordnet ist.

10. Vorrichtung nach Anspruch 9, dadurch gekennzeichnet, daß - in Förderrichtung gesehen, vor und hinter dem Schweißwerkzeug (4) je eine Stützrolle (28, 29) für das Förderband (18) vorgesehen sind, die im Zuge eines Schweißarbeitstaktes zur Lösung des Schweißgutes aus der Mulde des Gegenwerkzeugs (6) und zum Abtransport absenkbar sind.

11. Vorrichtung nach Anspruch 9 oder 10, dadurch gekennzeichnet, daß der Schweißwerkzeug-Gegenwerkzeug-Einheit Vorschubzangen (27) zum taktweisen Erfassen und schrittweisen Vorbewegen des Förderbandes (18) nachgeschaltet sind.

12. Vorrichtung nach Anspruch 11, dadurch gekennzeichnet, daß außer dem in und entgegen Förderrichtung hin und her bewegbaren Vorschubzangen (27) stationäre Haltezangen (30) für die vorübergehende Fixierung des Förderbandes (18) während des Vorschubzangen-Rückhubes vorgesehen sind.

13. Vorrichtung nach einem der Ansprüche 9 bis 12, dadurch gekennzeichnet, daß der Schweißwerkzeug-Gegenwerkzeug-Einheit eine Ausreißstation mit einer Vorrichtung zum Abführen der geschweißten Gegenstände getrennt vom Foliengitter nachgeschaltet ist.

14. Vorrichtung nach einem der Ansprüche 4 bis 13, dadurch gekennzeichnet, daß der das Schweißwerkzeug tragenden Schweißpresse eine die Eindringtiefe der Schneidkante (8) des Gegenwerkzeugs (6) im Bereich der Schweißnaht bestimmende Abstandsbegrenzung zugeordnet ist.

15. Vorrichtung nach einem der Ansprüche 4 bis 14, dadurch gekennzeichnet, daß die hochhitzebeständige Trennfolie (18) durch eine Polyimidfolie, eine PTFE-Glasgewebe-Folie oder auch eine metallische Folie mit Antihaftbeschichtung oder Antihafteigenschaften gebildet ist.

Fig. 1

Fig. 2

Fig. 3

EP 0 387 373 A2